# EUROPÄISCHE PATENTSCHRIFT

(11) **EP 0 562 406 B1**
(45) Veröffentlichungstag und Bekanntmachung des Hinweises auf die Patenterteilung: **11.06.1997**
(21) Anmeldenummer: 93104178.4
(22) Anmeldetag: 15.03.1993
(51) Int. Cl.: A01G 23/093, A01D 45/02

(54) **Mähhäcksler für stengelige Pflanzen und Gehölze**
Mower-chopper for stack plants and wood
Faucheuse-hacheuse pour plantes à tiges et pour bois

(30) Priorität: 27.03.1992 DE 4209947; 11.11.1992 DE 4238007
(43) Veröffentlichungstag der Anmeldung: 29.09.1993
(73) Patentinhaber: Wieneke, Franz, Prof. Dr.-Ing., D-37120 Bovenden (DE)
(72) Erfinder: Wieneke, Franz, Prof. Dr. Ing., W-3406 Bovenden (DE); Döhrer, Karl, W-3549 Diemelstadt-Rhoden (DE)
(74) Vertreter: Münich, Wilhelm, Dr.

(56) Entgegenhaltungen:
- DE-A- 1 657 329
- DE-U- 7 122 906
- US-A- 4 043 366

## Beschreibung

Die Erfindung betrifft einen Mähhäcksler für stark stengelige Pflanzen, insbesondere Gehölze. Es ist bekannt, in Reihen oder Streifen stehende stark stengelige Pflanzen, wie Mais, Hirse, Zuckerrohr, Pappeln oder Weiden abzuschneiden und zu zerkleinern. Solche, an einem Traktor oder an einem Triebsatz angebaute Geräte, bestehen aus einem Mähorgan, Förderelementen für den Transport der abgeschnittenen stengeligen Pflanzen oder Gehölze zu einer Zerkleinerungseinrichtung und einem Auswurforgan für das stückige Material. Diese Funktionselemente sind hintereinander angeordnet und laden, besonders im bevorzugten Frontanbau, weit aus; das beeinträchtigt die Manovrierfähigkeit in hohem Maße, macht eine Gegenballastierung des Fahrzeugs notwendig und erfordert insgesamt einen hohen technischen Aufwand.
So ist eine Lösung bekannt, bei der über zwei waagerecht umlaufende, nebeneinander liegenden Schneidscheiben, vertikale Fördertrommeln angeordnet sind, welche das abgeschnittene Buschwerk einem Häcksler zuführen (US-Patent 4043366). Dabei müssen die Stengel oder Bäume nach dem Schnitt von der vertikalen Stellung in eine horizontale Lage überführt werden, was sich bei mehrere Meter hohen Pflanzen schwierig gestaltet; die noch davor stehenden stengeligen Pflanzen oder Bäume stützen die schon abgeschnittenen ab und verhindern das Niederfallen. Neben funtionellen Schwächen ist auch diese Lösung, infolge der Trennung von Schneidrotoren und Häcksler, als aufwendig und zu weit nach vorn ausladend anzusehen.
Den nahezu vertikalen Einzug von langstengeligen Pflanzen soll eine Lösung ermöglichen, bei der über einer horizontal umlaufenden Messerscheibe eine leicht seitlich geneigte Einzugslade aufgesetzt ist (SU-Patent 912115). Nachdem der Baum abgeschnitten ist, nehmen Messer, die auf der rotierenden Scheibe angeordnet sind, diesen mit und schneiden Stück für Stück unten ab, wobei er gleichzeitig an der schrägen Wand der Lade eingezogen wird. Stärker buschige Bäume lassen sich auf diese Weise nicht sicher einziehen; es kommt zu Stauungen, da kein zwangsweiser Einzug vorliegt.
Einen praktisch vertikalen Einzug weisen auch die Häcksler nach DE-A-1657329 und DE-A-2003964 auf. Der Einzug, das Schneiden und das Auswerfen vollzieht sich in drei verschiedenen Ebenen mit getrennten Organen; so ergibt sich eine baulich sperrige und relativ aufwendige Bauweise.

Aufgabe der Erfindung ist es, lange, dickstengelige Pflanzen, insbesondere auch Buschwerk und Bäume in der Fahrt abzuschneiden, zwangsweise, nahezu vertikal geführt, einzuziehen, schon mit den Einzugsorganen zu Schnitzel zu zerkleinern und diese auszuwerfen; dabei wird gleichzeitig die Forderung nach einer kompakten, wenig ausladenden Bauweise gestellt, so daß der Mähhäcksler auch für den Frontanbau am Traktor geeignet ist.
Diese Aufgabe wird erfindungsgemäß dadurch gelöst, daß über einem annähernd horizontal umlaufenden Mähwerk, das vorzugsweise als rotierende Mähscheibe ausgebildet ist, nach unten fördernde Elemente aufgesetzt sind und ferner, daß zwischen Mähscheibe und dieser vertikalen Fördereinrichtung Zerkleinerungs- und Auswurfelemente angeordnet sind. Für den etwa vertikalen Einzug wird vorzugsweise eine zylindrische oder nach oben konische zulaufende Schnecke verwandt, deren Gänge zumindest im unteren Teil angeschärft sind. Die rotierenden Arbeitsorgane sind von einem Gehäuse umgeben, das, der Schnecke zugewandt, einen Einlaufraum mit einer Abstreifwand aufweist.
Anstelle der vertikalen Förder- und Schneidschnecke können auch Walzenpaare Verwendung finden, welche die abgemähten Pflanzen oder Bäume nach unten fördern und zu den über der rotierenden Mähscheibe liegenden Zerkleinerungselementen schieben.

Die in Stücke geschnittenen Pflanzen, die Schnitzel, werden von den Wurfelementen, wie z.B. von rotierenden Schaufeln, ausgetragen. Über eine angeschlossene Förderleitung gelangen sie in einen Sammelbehälter.

Diese vertikale Anordnung der Arbeitsorgane übereinander führt zu einem stopfungsfreien, nahezu vertikal geführten Zwangseinzug und zu einem kompakten, einfachen Gerät, dessen Schwerpunkt nahe am tragenden Fahrzeug liegt. Damit ist eine gute Manövrierfähigkeit und eine volle Übersicht vom Fahrersitz aus gegeben. Das gilt sowohl für den Frontanbau als auch für den Heckanbau am rückwärtsfahrenden Schlepper.

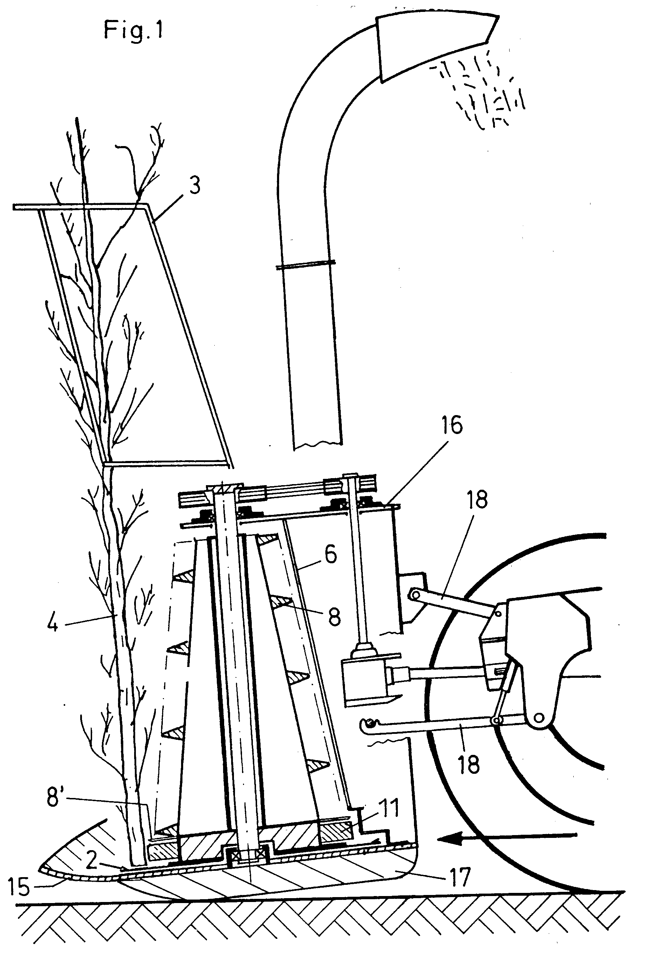

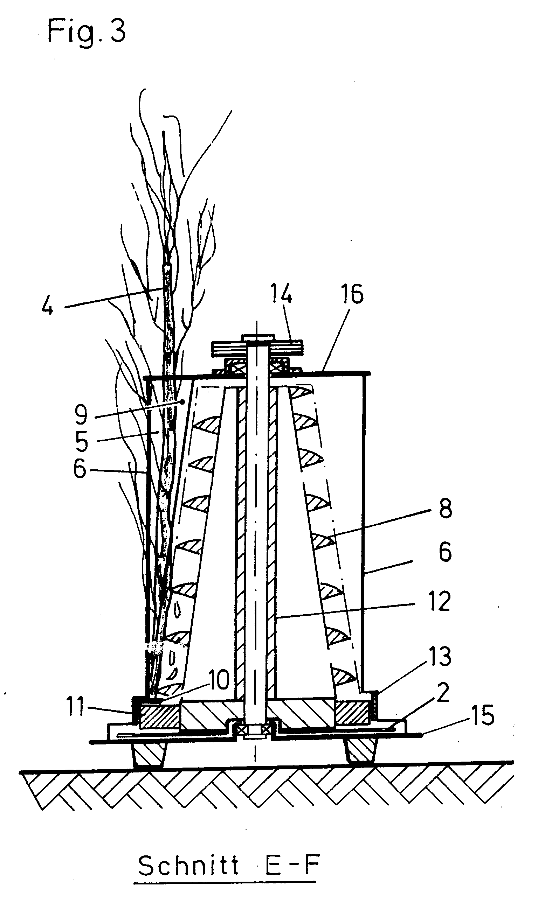

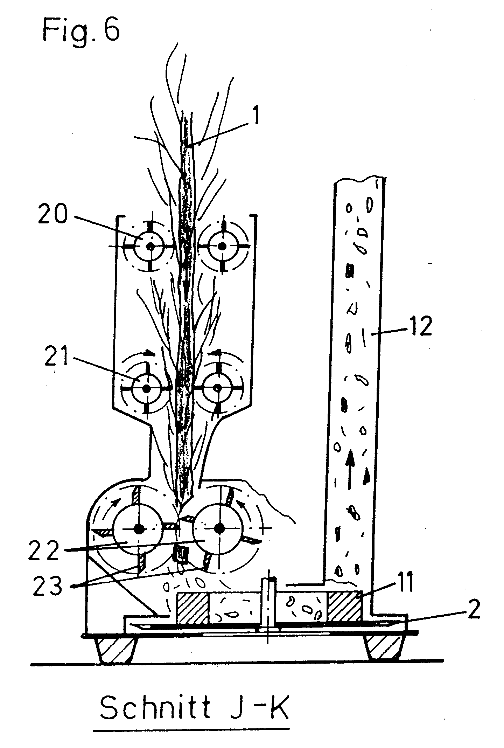

In den Figuren 1 bis 6 ist der Gegenstand der Erfindung in seinem wichtigsten Elementen in mehreren Variationen dargestellt.

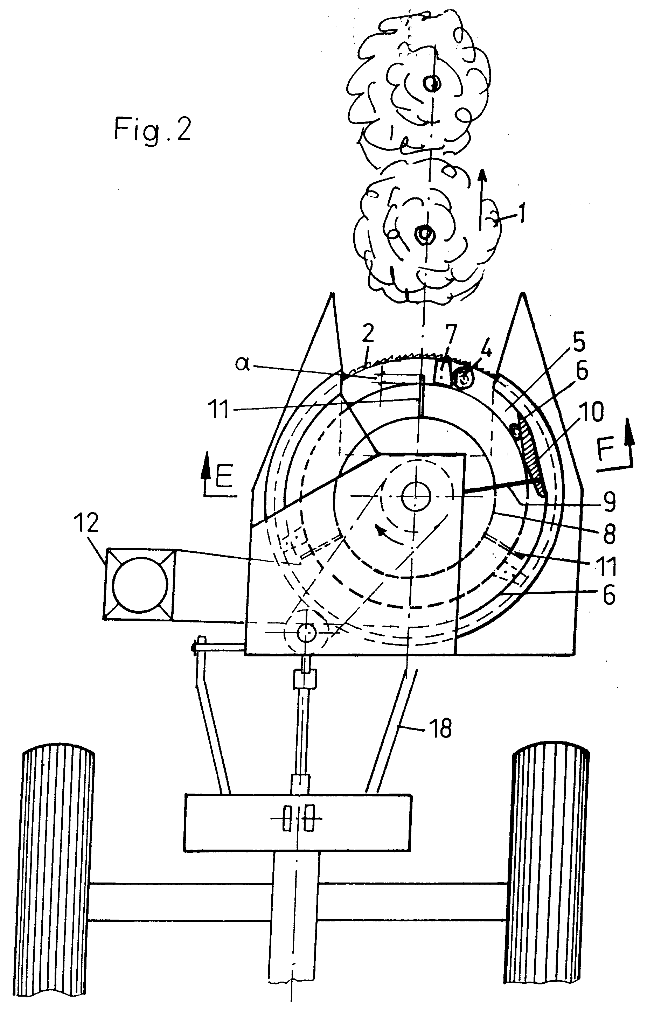

In den Figuren 1,2 und 3 werden die noch stehenden Bäume 1 von dem rotierenden Sägeblatt 2 in einigen Zentimetern Abstand vom Boden abgeschnitten. Ein Bügel 3 fängt den abgeschnittenen Baum 4 ein. Der abgeschnittene Baum 4 wird auf der rotierenden Sägescheibe 2 stehend zur Seite in den Einlaufraum 5 gefördert, der sich durch die vordere Erweiterung des Gehäusemantels 6 zur konischen Schnecke 8 hin ergibt. Das Einziehen des abgeschnittenen Stammes kann durch nicht dargestellte vertikale Einzugswalzen oder horizontal liegende Einzugsschnecken unterstützt werden. Der etwa radiale Einzug wird auch durch die im Außenbereich der Sägescheibe 2 aufgesetzten Schneidleisten 7 unterstützt. Gleichzeitig stößt der abgeschnittene Baum auch gegen die Gänge der umlaufenden Schnecke 8, die ihn radial mitnehmen. Der Einlaufraum 5 verengt sich in Drehrichtung, so daß die Schneckengänge in den Stamm eindringen. Dadurch, daß sich der Einlaufraum 5 auch von oben nach unten verengt (Fig. 2 u. 3), dringen die geschärften Schneckengänge im unteren Bereich in den Stamm ein und schieben ihn nach unten, wobei Schnitzel abplatzen bis er am umteren Ende völlig durchschnitten ist. Beim vertikalen Einziehen gleitet der Stamm mit seinen Zweigen an der leicht nach vorn geneigten Abstreifwand 9. Die Schnecke versucht ihn entsprechend der Schneckensteigung nach unten zu fördern. Solange aber der abgeschnittene Stamm mit seiner Schnittfläche auf dem rotierenden Sägeblatt aufsteht, ist dieses nicht möglich; es kann zu Verspannungen und zum Blockieren des unteren Stammabschnittes zwischen der Schnecke und dem Sägeblatt kommen. Hier schaffen nun die in der Randzone auf der Schneidscheibe 2 fest angeordneten Schneidleisten 7 Freiraum; sie schneiden das aufliegende Stammende Stück für Stück ab.
Zum Abschneiden werden auch Hackmesser 8' verwandt. Dem unteren Schneckenende gegenüberliegend ist gehäusefest eine Gegenschneide 10 angeordnet. Das untere Gangende der Schnecke überfährt die Gegenschneide 10 leicht, so daß eine vollständige Abtrennung des unteren Restabschnittes des Stammes erfolgt. Die Schaufeln 11 überragen die unteren Schneckengänge um den Betrag a, so daß auch sie den radialen Einzug unterstützen. Die Schaufeln 11 sind frontal swie an der oberen Seite angeschärft und unterfahren leicht die feste Gegenschneide 10. Sie tragen so zur Zerspanung und zu dem vollständigen Abtrennen des unteren Stammabschnittes bei. Das die Schaufeln 11 umgebende Gehäuse kann mit Leisten 13 ausgelegt werden, so daß beim Auswerfen eine Nachzerkleinerung der Schnitzel erfolgt, falls eine solche erwünscht ist.

In den Figuren 1, 2 und 3 bilden Sägescheibe 2, Wurfschaufeln 11 und Schneidschnecke 8 einen kompakten Rotor, dessen Hohlwelle 12 mit einer Welle fest verbunden ist. Dieser Rotor wird über die Riemenscheibe 14 angetrieben. Die Welle ist in der Grundplatte 15 und der Kopfplatte 16 gelagert. Die Grundplatte 15 stützt sich über Kufen 17 zum Boden hin ab.
Es ist auch möglich, über eine Welle und zwei Hohlwellen die Sägescheibe, die Schnecke und die Wurfschaufeln getrennt anzutreiben.

Durch einen getrennten Antrieb der Hackmesser 8' kann mittels Drehzahländerung die Schnitzellänge eingestellt werden. Der gesamte Mähhacker wird vom Dreipunktgestänge 18 des Schleppers getragen.

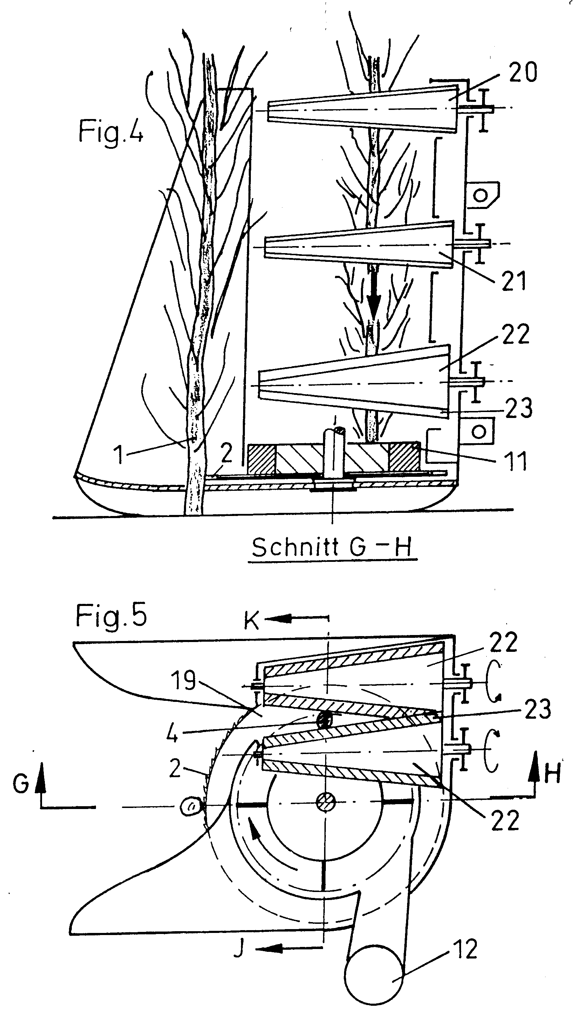

Anstelle der etwa vertikalen Zufuhr des Stammes durch eine Schnecke können auch Walzenpaare Verwendung finden, die oberhalb der in Bodennähe arbeitenden Mähorgane angeordnet sind. Solche Lösungen sind in den Figuren 4 bis 6 dargestellt.

Der Baum 1 wird durch das Sägeblatt 2 abgetrennt und in den keilförmigen Einlaufraum 19 von übereinander angeordneten Walzenpaaren 20,21,22 geworfen und durch die paarweise gegensinning umlaufenden Walzen nach unten gefördert. Das untere Walzenpaar 22 ist mit geraden oder gewundenen Schneidleisten 23 besetzt, die den Stamm oder die stengelige Pflanze in Stücke schneiden (Fig.4,5 und 6). Die oberhalb der Kreissäge 2 angebrachten Wurfschaufeln 11 werfen das stückige Material in eine Rohrleitung 12 oder auf einen Elevator zum Weitertransport.

Für das Mähen stark stengeliges Gutes, insbesondere von Buschwerk, können mehrere Sägescheiben nebeneinander, mit gleichen Drehsinn umlaufend, angeordnet werden. So ergibt sich eine seitliche Förderbewegung des abgemähten Materials, das dann in einen Einzugsraum 5 einmündet, wie er vorstehend beschrieben wurde.

Darüberhinaus ist es auch möglich, einen Mähhäcksler mit mehreren Rotoren mit den beschriebenen Arbeitsorganen für Mähen, Zuführen und Zerkleinern in Fahrtrichtung nebeneinanderliegend auszustatten. Dadurch können auch nicht in Reihen stehende Pflanzen aus der Breite geschnitten und zerkleinert werden oder gleichzeitig mehrere Reihen Bäume gemäht werden. Bei dieser Variante können die Rotoren sowohl gleiche als auch paarweise gegenläufige Drehrichtung haben.

## Patentansprüche

1. Mähhäcksler für dickstengelige Pflanzen wie Mais, Hirse, Zuckerrohr und insbesondere für Buschwerk sowie in Reihen gepflanzte Gehölze wie Pappeln und Weiden mit einem bodennah annähernd horizontal umlaufenden Mähorgan (2), Förderelementen (8,20,21,22) für den Weitertransport des abgeschnittenen Mähgutes zu Schneidorganen (8',23), die das Mähgut zerkleinern und über Auswurfelemente (11) austragen,
wobei die Förderelemente (8,20,21, 22) derart angebracht sind, daß sie einen etwa senkrechten Zwangseinzug des abgeschnittenen Materials ermöglichen und daß unterhalb der Förderelemente hackende oder das abgeschnittene Material ziehende, umlaufende Schneidorgane (8',23) vorgesehen sind, dadurch gekennzeichnet, daß die Auswurfelemente (11) zwischen den Schneidorganen (8',23) und dem Mähorgan (2) angeordnet sind.

2. Mähhäcksler nach Anspruch 1,
dadurch **gekennzeichnet**, daß das Mähorgan (2) eine Schneidscheibe ist, über der, nahezu vertikal nach unten fördernde Förderelemente angebracht sind und daß die Auswurfelemente (11) achsgleich mit der Schneidscheibe zwischen der Schneidscheibe und den Förderelementen als umlaufend angeschärfte Wurfschaufeln (11) angeordnet sind.

3. Mähhäcksler nach Anspruch 1 oder 2,
dadurch **gekennzeichnet**, daß ein Förderelement achsgleich über der Schneidscheibe rotierbar angeordnet ist, das als zylindrische oder als nach oben konisch zulaufende Schnecke (8) ausgebildet ist, deren Gänge zumindest im unteren Teil umlaufend angeschärft sind.

4. Mähhäcksler nach Anspruch 3,
dadurch **gekennzeichnet**, daß ein Gehäusemantel (6) vorgesehen ist, der in Zuführrichtung offen ist und zur Schnecke (8) einen seitlichen Einlaufraum (5) für das abgeschnittene Material aufweist.

5. Mähhäcksler nach Anspruch 4,
dadurch **gekennzeichnet**, daß sich der Einlaufraum (5) in Einlaufrichtung radial und von oben nach unten bis zur Anlage an die Schneidschnecke (8) verengt und durch eine Abstreifwand (9) in Drehrichtung abgesperrt ist.

6. Mähhäcksler nach einem der Ansprüche 1 bis 5,
dadurch **gekennzeichnet**, daß die rotierenden Arbeitsorgane (2,8,11) auf einer gemeinsamen Welle oder getrennt auf einer Welle oder Hohlwellen angeordnet sind und mit gleicher oder verschiedenen Drehzahlen angetrieben werden.

7. Mähhäcksler nach einem der Ansprüche 3 bis 6,
dadurch **gekennzeichnet**, daß dem unteren Ende der Schneidschnecke (8) gegenüberliegend, gehäuseseitig eine feste Gegenschneide (10) angeordnet ist, die in die äußeren Arbeitskreise des unteren Schneckengangs und der Wurfschaufeln (11) einragt.

8. Mähhäcksler nach Anspruch 1 oder 2,
dadurch **gekennzeichnet**, daß die Förderelemente horizontal über der Schneidscheibe angeordnete Walzenpaare (20,21,22) sind, die in vertikalen Abständen angeordnet sind, deren Umlaufsinn jeweils gegensinnig zur Mitte, nach unten gerichtet ist.

9. Mähhäcksler nach Anspruch 8,
dadurch **gekennzeichnet**, daß das untere Walzenpaar (22) gerade oder schneckenförmige Schneidleisten (23) trägt und zwischen der Schneidscheibe (2) oder einem Schneidscheibenpaar und dem unteren mit Schneiden belegten Walzenpaar die Wurfschaufeln (11) angeordnet sind, denen eine Rohrleitung (12) folgt.

10. Mähhäcksler nach einem der Ansprüche 1 bis 9,
dadurch **gekennzeichnet**, daß die Schneidscheibe (2) als Sägeblatt ausgebildet ist, die in der Randzone mit Schneidleisten (7) belegt ist.

11. Mähhäcksler nach einem der Ansprüche 1 bis 10,
dadurch **gekennzeichnet**, daß den Wurfschaufeln (11) ein Gehäusemantelabschnitt gegenüberliegt und mit Schneid- und/oder Reibleisten (13) belegt ist.

12. Mähhäcksler nach einem der Ansprüche 1 bis 11,
dadurch **gekennzeichnet**, daß vor dem Einlaufraum (5) eine Einzugswalze oder ein Walzenpaar oder waagerechte Schnecken für das Einziehen des abgemähten Materials angeordnet sind.

13. Mähhäcksler nach einem der Ansprüche 1 bis 12,
dadurch **gekennzeichnet**, daß als bodennahes Mähorgan mehrere nebeneinanderliegende Schneidscheiben (2) oder Rotoren mit den Arbeitsorganen (2,8,11) nebeneinander angeordnet sind, die gleichsinnig oder paarweise gegensinnig rotieren.

## Claims

1. A harvester chopper for plants with thick stalks such as maize, millet, sugar cane and, in particular, for shrubs as well as trees planted in rows such as poplars and willows, said harvester chopper having a mowing means (2) which revolves practically horizontally near to the ground, conveyor elements (8, 20, 21, 22) for transporting the cut crop material to cutting means (8', 23), which chop up the crop material and convey it out via ejection elements (11), with said conveyor elements (8, 20, 21, 22) being disposed in such a manner that they permit approximately vertical forced feeding of the crop material and said revolving cutting means (8', 23) chopping or drawing the cut crop material being provided below said conveyor elements,
characterized by said ejection elements (11) being disposed between said cutting means (8', 23) and said mowing means (2).

2. A harvester chopper according to claim 1,
characterized by said mowing means (2) being a cutting disk above which conveyor elements are placed which convey practically vertically downward and said ejection elements (11) being disposed as revolving sharpened throw shovels (11) between said cutting disk and said conveyor elements, said ejection elements (11) having the same axis as said cutting disk.

3. A harvester chopper according to claim 1 or 2,
characterized by a conveyor element being disposed in a revolving manner on the same axis above said cutting disk, said conveyor element being designed as a cylindrical or conically upward tapering worm (8), the passages of which are sharpened radially at least in the bottom section.

4. A harvester chopper according to claim 3,
characterized by a casing (6) being provided which is open in the feed direction and has toward said worm (8) a lateral intake region (5) for the cut material.

5. A harvester chopper according to claim 4,
characterized by said intake region (5) tapering radially in the intake direction and downward until it meets said cutting worm (8) and being closed by a stripper wall (9) in the revolving direction.

6. A harvester chopper according to one of the claims 1 to 5,
characterized by the revolving operating means (2, 8, 11) being disposed on a common shaft or separately on a shaft or hollow shafts and being driven with the same or different revolutions per minute.

7. A harvester chopper according to one of the claims 3 to 6,
characterized by a stationary counter blade (10), which projects into the outer operating spheres of the bottom passage of said cutting worm (8), and said throw shovels (11) being disposed on the opposite side of the bottom end of said cutting worm (8) on the casing side.

8. A harvester chopper according to claim 1 or 2,
characterized by said conveyor elements being pairs of rollers (20, 21, 22) disposed horizontally above said cutting disk, said roller being disposed at vertical intervals and whose revolving direction runs in opposite directions respectively toward the center and downward.

9. A harvester chopper according to claim 8,
characterized by the bottom roller pair (22) bearing straight or worm-shaped cutting blades (23) and said throw shovels (11), after which a pipeline (12) is disposed, being disposed between said cutting disk (2) respectively a pair of cutting disks and said bottom roller pair bearing said blades.

10. A harvester chopper according to one of the claims 1 to 9,
characterized by said cutting disk (2) being designed as a saw blade which bears cutting blades 7 in its peripheral zone.

11. A harvester chopper according to one of the claims 1 to 11,
characterized by a section of the casing facing said throw shovels (11) and bearing cutting and/or friction blades (13).

12. A harvester chopper according to one of the claims 1 to 10,
characterized by a feed roller respectively a roller pair respectively horizontal worms being disposed in front of said intake region (5) for intake of the mowed crop material.

13. A harvester chopper according to one of the claims 1 to 12,
characterized by as said mowing means near to the ground, multiple, adjacent cutting disks (2) respectively rotors having said operating means (2, 8, 11) being disposed adjacent to each other, which revolve in the same direction or in pairs in opposite directions.

## Revendications

1. Faucheuse-hacheuse pour plantes à tiges épaisses telles que du maïs, du millet, de la canne à sucre et, en particulier, pour des buissons, ainsi que pour des bois plantés en lignes, tels que des peupliers et des saules, comprenant un organe de fauchage (2) accomplissant une révolution approximativement horizontale près du sol, et des éléments convoyeurs (8, 20, 21, 22, 24) pour le transfert du produit fauché, sectionné, vers des organes de coupe (8', 23, 24') qui broient le produit fauché, puis l'évacuent par l'intermédiaire d'éléments éjecteurs (11),
les éléments convoyeurs (8, 20, 21, 22, 24) étant implantés de manière à autoriser une introduction forcée sensiblement verticale de la matière sectionnée, et des organes rotatifs de coupe (8', 23, 24'), exerçant un effet de hachage ou de traction sur la matière sectionnée, étant prévus au-dessous des éléments convoyeurs, caractérisée par le fait que les éléments éjecteurs (11) sont interposés entre les organes de coupe (8', 23, 24') et l'organe de fauchage (2).

2. Faucheuse-hacheuse selon la revendication 1,
caractérisée par le fait que l'organe de fauchage (2) est un disque de sectionnement au-dessus duquel sont implantés des éléments convoyeurs convoyant quasi verticalement vers le bas ; et par le fait que les éléments éjecteurs (11) sont disposés sur le même axe que le disque de sectionnement, entre le disque de sectionnement et les éléments convoyeurs, sous la forme de pales d'éjection (11) aiguisées et effectuant une révolution.

3. Faucheuse-hacheuse selon la revendication 1 ou 2,
caractérisée par le fait qu'un élément convoyeur, agencé à rotation coaxiale au-dessus du disque de sectionnement, est réalisé sous la forme d'une vis sans fin (8) cylindrique ou s'achevant coniquement vers le haut et dont les spires, effectuant une révolution au moins dans la partie inférieure, sont aiguisées.

4. Faucheuse-hacheuse selon la revendication 3,
caractérisée par le fait qu'il est prévu une enveloppe de carter (6) ouverte dans la direction d'amenée et présentant, vers la vis sans fin (8), un espace latéral (5) de pénétration de la matière sectionnée.

5. Faucheuse-hacheuse selon la revendication 4,
caractérisée par le fait que l'espace de pénétration (5) se rétrécit radialement dans la direction de pénétration et de haut en bas, jusqu'au contact avec la vis sans fin sectionneuse (8), et est obturé par une paroi racleuse (9) dans le sens de rotation.

6. Faucheuse-hacheuse selon l'une des revendications 1 à 5,
caractérisée par le fait que les organes rotatifs de travail (2, 8, 11) sont implantés sur un arbre commun ou, séparément, sur un arbre ou des arbres creux, et sont entraînés à une même vitesse angulaire ou à des vitesses angulaires différentes.

7. Faucheuse-hacheuse selon l'une des revendications 3 à 6,
caractérisée par le fait qu'une contre-lame fixe (10) disposée, côté carter, en vis-à-vis de l'extrémité inférieure de la vis sans fin sectionneuse (8), s'engage dans les circonférences extérieures de travail des pales d'éjection (11) et de la spire inférieure de la vis sans fin.

8. Faucheuse-hacheuse selon la revendication 1 ou 2,
caractérisée par le fait que les éléments convoyeurs sont des paires de cylindres (20, 21, 22) placées horizontalement au-dessus du disque de sectionnement, agencées à intervalles verticaux, et dont la direction de révolution est respectivement orientée vers le bas, en sens inverse par rapport au centre.

9. Faucheuse-hacheuse selon la revendication 8,
caractérisée par le fait que la paire inférieure de cylindres (22) porte des barrettes de sectionnement (23) rectilignes ou hélicoïdales et les pales d'éjection (11), auxquelles succède un conduit tubulaire (12), sont interposées entre le disque de sectionnement (2) ou une paire de disques de sectionnement, et la paire inférieure de cylindres garnie de tranchants.

10. Faucheuse-hacheuse selon l'une des revendications 1 à 9,
caractérisée par le fait que le disque de sectionnement (2) est réalisé sous la forme d'une lame de scie garnie de barrettes de sectionnement (7) dans la zone marginale.

11. Faucheuse-hacheuse selon l'une des revendications 1 à 10,
caractérisée par le fait qu'un segment d'enveloppe de carter, placé en vis-à-vis des pales d'éjection (11), est garni de barrettes de sectionnement et/ou de raclement (13).

12. Faucheuse-hacheuse selon l'une des revendications 1 à 11,
caractérisée par le fait qu'un cylindre enfourneur ou une paire de cylindres, ou bien des vis sans fin horizontales, sont placés devant l'espace de pénétration (5) en vue de l'introduction de la matière fauchée.

13. Faucheuse-hacheuse selon l'une des revendications 1 à 12,
caractérisée par le fait que plusieurs disques de sectionnement juxtaposés (2), ou bien des rotors munis des organes de travail (2, 8, 11), agencés en juxtaposition en tant qu'organe de fauchage proche du sol, tournent dans le même sens ou, par paires, dans des sens opposés.
